# EUROPÄISCHE PATENTANMELDUNG

(11) **EP 2 853 337 A2**
(43) Veröffentlichungstag der Anmeldung: **01.04.2015**
(21) Anmeldenummer: 14003234.3
(22) Anmeldetag: 18.09.2014
(51) Int. Cl.: B23K 20/12

(54) **Verfahren zur Herstellung einer unlösbaren Verbindung zwischen mindestens zwei Werkstücken sowie eine nach diesem Verfahren hergestellte Verbindung**

(30) Priorität: 27.09.2013 DE 102013016562
(71) Anmelder: KACO GmbH + Co. KG, 74072 Heilbronn (DE)
(72) Erfinder: Voll, Mario, 74912 Kirchardt (DE)
(74) Vertreter: Kohl, Karl-Heinz

(57) **Zusammenfassung**

Mit dem Verfahren wird das eine Werkstück (1) mit einem Werkzeug (3) örtlich so erhitzt, dass der erhitzte Werkstückbereich zu einer Buchse (5) geformt werden kann, die über das Werkstück (1) vorsteht. Die Buchse (5) verbindet sich stoffschlüssig mit dem anderen Werkstück (2). Der Stoffschluss zwischen den beiden Werkstücken(1, 2) führt zu einer einwandfreien festen Verbindung zwischen den Werkstücken. Die Verbindung hat die aus dem einen Werkstück (1) herausgeformte Buchse (5), die stoffschlüssig mit dem anderen Werkstück (2) verbunden ist.

## Beschreibung

Die Erfindung betrifft ein Verfahren zur Herstellung einer unlösbaren Verbindung zwischen mindestens zwei Werkstücken nach dem Oberbegriff des Anspruches 1 sowie eine nach diesem Verfahren hergestellte Verbindung nach dem Oberbegriff des Anspruches 10.

In der Automobilindustrie werden Schraubverbindungen verwendet, bei denen Einschweißmuttern auf ein blechförmiges Werkstück aufgeschweißt werden. Sie sind an ihrer Innenwand mit einem Gewinde versehen. In das Blech wird eine Bohrung eingebracht, deren Durchmesser ungefähr dem Innendurchmesser der Hülse entspricht. Anschließend wird die mit dem Gewinde versehene Hülse auf das Blech so aufgeschweißt, insbesondere mittels Widerstandsschweißen, dass anschließend durch die Öffnung im Blech eine Schraube in die Hülse geschraubt werden kann. Die Herstellung einer solchen Verbindung ist aufwändig und kostenintensiv. Die Bleche müssen zunächst gebohrt oder gelocht werden. In die Hülsen wird das Innengewinde zerspanend eingebracht und anschließend die Hülse positionsgenau im Bereich des vorgebohrten oder gelochten Loches aufgeschweißt. Die zerspanende Gewindeherstellung führt zu einer teuren Verfahrensweise und zu einem hohen Materialverbrauch.

Der Erfindung liegt die Aufgabe zugrunde, dass gattungsgemäße Verfahren und die gattungsgemäße Verbindung so auszubilden, dass eine kostengünstige und dennoch den Anforderungen bezüglich der Verbindung genügende Verfahrensweise möglich ist.

Diese Aufgabe wird beim gattungsgemäßen Verfahren erfindungsgemäß mit den kennzeichnenden Merkmalen des Anspruches 1 und bei der gattungsgemäßen Verbindung erfindungsgemäß mit den kennzeichnenden Merkmalen des Anspruches 10 gelöst.

Beim erfindungsgemäßen Verfahren wird das eine Werkstück zunächst örtlich mit einem rotierenden Werkzeug so erhitzt, dass der erhitzte Werkstückbereich weich wird und mit dem Werkzeug zu einer Buchse geformt werden kann, die über das Werkstück vorsteht. Die Reibungshitze ist so hoch, dass sich das verdrängte Material in Form der Buchse mit dem Material des anderen Werkstückes stoffschlüssig vebindet. Der Stoffschluss zwischen den beiden Werkstücken führt zu einer einwandfreien festen Verbindung zwischen den beiden Werkstücken.

Bei einer bevorzugten Ausführungsform ist das eine Werkstück blechförmig und das andere Werkstück hülsenförmig ausgebildet. Grundsätzlich ist es auch möglich, dass nicht das gesamte Werkstück, sondern nur ein Werkstückbereich blechförmig ausgebildet ist. Der dünne Werkstückbereich lässt sich problemlos mit dem Werkzeug so erhitzen, dass die Buchse aus dem erhitzten Werkstückbereich geformt werden kann.

Das hülsenförmige Werkstück, das eine einzelne Hülse oder auch ein hülsenförmiger Bereich eines größeren weiteren Werkstückes sein kann, sitzt auf der geformten Buchse und ist fest mit ihr verbunden.

Vorteilhaft wird in die Innenwand des hülsenförmigen Werkstückes und in die Innenwand der geformten Buchse ein Innengewinde eingebracht. Dadurch wird ein Teil des Gewindes auch durch die geformte Buchse gebildet. Auf diese Weise ergibt sich eine ausreichend große Gewindelänge.

Unter einem dünnen Werkstückbereich bzw. einem blechförmigen Werkstück ist zu verstehen, dass der Werkstückbereich durch Hitzeeinwirkung, insbesondere durch Reibungshitze, so stark erwärmt werden kann, dass sich dieser Werkstückbereich verformen lässt.

Vorteilhaft wird das hülsenförmige Werkstück an das eine Werkstück angesetzt und erst anschließend das Werkstück im Bereich des hülsenförmigen Werkstückes erhitzt. Das hierbei entstehende weiche Material wird dann in das hülsenförmige Werkstück verdrängt. Der erhitzte, verdrängte Werkstückbereich verbindet sich stoffschlüssig mit dem hülsenförmigen Werkstück. Eine solche Vorgehensweise führt zu einer einwandfreien Gasdichtheit der Verbindung im unverschraubten und verschraubten Zustand. Aufgrund des Stoffschlusses zwischen dem verdrängten Werkstückbereich und dem hülsenförmigen Werkstück wird keine Naht oder dergleichen gebildet, über die Gas hindurchtreten könnte. Aufgrund der Stoffschlussverbindung kann das im hülsenförmigen Werkstück befindliche Gewinde ein sehr hohes Anzugsmoment, das beispielsweise zwischen 9 und 12 Nm liegen kann, zuverlässig aufnehmen.

Die Innenkontur der Hülse bestimmt auch wesentlich den Fluss des verdrängten Materials.

Um das Werkstück örtlich zu erhitzen, wird vorteilhaft ein Fließbohrer eingesetzt. Mit ihm wird beim Fließbohrvorgang das Material des Werkstückes durch Reibungshitze so stark erhitzt, dass dieses erhitzte Material durch den Fließbohrer zur Bildung der Buchse verdrängt werden kann. Es ist dadurch in einem Arbeitsschritt möglich, in das Werkstück die Öffnung einzubringen, den erhitzten Randbereich der Öffnung zur Buchse zu verformen und das hülsenförmige Werkstück fest, insbesondere stoffschlüssig, mit der geformten Buchse des Werkstückes zu verbinden.

Der erhitzte Werkstückbereich wird mit dem Fließbohrer in den Aufnahmeraum des hülsenförmigen Werkstückes verdrängt. Er wird vorteilhaft durch eine in der Innenseite vorgesehene Durchmessererweiterung gebildet, die so gewählt ist, dass das verdrängte Material aufgenommen werden kann. Vorteilhaft ist das hülsenförmige Werkstück so geformt, dass es über seine axiale Länge konstante Wandstärke hat. In dem Bereich, in dem das hülsenförmige Werkstück an das eine Werkstück anschließt, ist das hülsenförmige Werkstück aufgeweitet ausgebildet, wodurch der Aufnahmeraum gebildet wird. Das hülsenförmige Werkstück kann in diesem Bereich größer gezogen oder mit einem größeren Durchmesser ausgebildet sein.

Der Aufnahmeraum des hülsenförmigen Werkstückes ist vorteilhaft so groß, dass das verdrängte Material des Werkstückes den Aufnahmeraum vollständig ausfüllt. Dadurch weist das hülsenförmige Werkstück anschließend im Bereich des Aufnahmeraumes eine größere Wandstärke auf als im daran anschließenden Bereich. Mit dem verstärkten Wandabschnitt schließt das hülsenförmige Werkstück an das eine Werkstück an, so dass in diesem Übergangsbereich zwischen dem hülsenförmigen Werkstück und dem Werkstück eine zuverlässige Festigkeit gegeben ist.

Optimal sind der Aufnahmeraum und das verdrängte Material so aufeinander abgestimmt, dass das verdrängte Material den Aufnahmeraum vollständig ausfüllt. Auf jeden Fall ist der Aufnahmeraum so groß, dass kein verdrängtes Material außerhalb des Aufnahmeraumes verbleibt, das die Verbindung zerstören könnte.

Vorteilhaft wird der Aufnahmeraum so mit dem verdrängten Material gefüllt, dass der Innendurchmesser des gefüllten Aufnahmeraumes gleich groß ist wie der Innendurchmesser des daran anschließenden Bereiches des hülsenförmigen Werkstückes. Dadurch wird erreicht, dass das hülsenförmige Werkstück über seine Länge konstanten Innendurchmesser hat. Da der erhitzte Bereich des Werkstückes in den Aufnahmeraum des hülsenförmigen Werkstückes verdrängt worden ist, ist dieses verdrängte Material einstückig mit dem hülsenförmigen Werkstück ausgebildet. Dies hat zur Folge, dass das Gewinde sich von der vom hülsenförmigen Werkstück abgewandten Seite des Werkstückes aus nach innen in das hülsenförmige Werkstück erstrecken kann. Damit kann auch dieses Werkstück zur Bildung des Innengewindes herangezogen werden. Dadurch ergeben sich große Gewindelängen, die zu einer sehr hohen Tragfähigkeit beitragen.

Das hülsenförmige Werkstück wird darüber hinaus derart mit dem Werkstück verbunden, dass ein Stoffschluss zwischen beiden Teilen entsteht. Dieser Stoffschluss entsteht nicht nur im Bereich des in den Aufnahmeraum verdrängten Materials, sondern auch im Anlagebereich des hülsenförmigen Werkstückes am anderen Werkstück. Aufgrund der Erhitzung, insbesondere durch die hohe Reibungshitze, erfolgt auch eine stoffschlüssige Verbindung zwischen dem hülsenförmigen Werkstück und dem Werkstück im Anlagebereich des hülsenförmigen Werkstückes. Es entsteht dadurch eine Verbindung, die einer einstückigen Ausbildung zwischen dem hülsenförmigen Werkstück und dem Werkstück entspricht. Dadurch ist auch die absolut gasdichte Ausbildung der Verbindung vorteilhaft gegeben.

Die erfindungsgemäße Verbindung zeichnet sich dadurch aus, dass das eine Werkstück eine herausgeformte Buchse aufweist, die derart stoffschlüssig mit dem anderen Werkstück verbunden ist, dass die Verbindung nahtfrei ist.

Vorteilhaft weist das hülsenförmige Werkstück an seinem dem einen Werkstück zugewandten Ende den Aufnahmeraum auf, der das aus dem Werkstück verdrängte Material aufnimmt.

Dieses verdrängte Material ist stoffschlüssig mit dem Material des hülsenförmigen Werkstückes verbunden.

Das hülsenförmige Werkstück der Verbindung weist vorteilhaft über seine Länge einen konstanten Innendurchmesser auf. Dadurch kann das Gewinde über eine große Länge vorgesehen werden.

Damit eine sichere Verbindung zwischen den beiden Werkstücken gewährleistet ist, ist das hülsenförmige Werkstück vorteilhaft mit einem Radialflansch versehen, mit dem es am Werkstück anliegt. Dadurch lassen sich das hülsenförmige Werkstück und das eine Werkstück einwandfrei relativ zueinander positionieren, so dass die beiden Teile zuverlässig miteinander verbunden werden können.

Der Radialflansch des hülsenförmigen Werkstückes ist vorteilhaft stoffschlüssig mit dem einen Werkstück ausgebildet. Der Stoffschluss ergibt sich daraus, dass bei der Herstellung der Verbindung das eine Werkstück im Auflagebereich des hülsenförmigen Werkstückes so stark erhitzt wird, dass sich die Materialien des Radialflansches des hülsenförmigen Werkstückes und des Werkstückes stoffschlüssig miteinander verbinden.

Sind die beiden Teile der Verbindung fest miteinander verbunden, kann anschließend problemlos das Gewinde eingebracht werden.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Es zeigen
- Fig. 1: den Verfahrensablauf bei der Herstellung einer erfindungsgemäßen Verbindung zwischen zwei Bauteilen,
- Fig. 2: in vergrößerter Darstellung und im Axialschnitt eine Hülse, die Teil der erfindungsgemäßen Verbindung ist.

Im Folgenden wird die erfindungsgemäße Verbindung beispielhaft an einer Schraubverbindung erläutert, bei der eine Hülse mit einem Blech unlösbar verbunden wird.

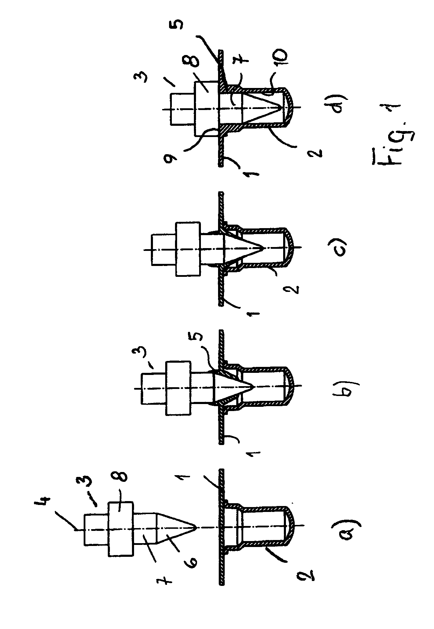

Fig. 1 a zeigt die Ausgangslage. Ein Blech 1, das vorteilhaft aus einem metallischen Werkstoff besteht, soll mit einer Hülse 2 unlösbar verbunden werden. Hierzu werden das Blech 1 und die Hülse 2 durch eine (nicht dargestellte) Spannvorrichtung fest gegeneinander gedrückt. Anschließend wird ein Fließbohrer 3 auf der von der Hülse 2 abgewandten Seite gegen das Blech 1 bewegt. Der Fließbohrer wird um seine Achse 4 drehbar angetrieben. Solche Fließbohrer sind bekannt und werden darum im Folgenden nur kurz erläutert. Der Fließbohrer 3 wird mit hoher Drehzahl und Axialkraft gegen das dünnwandige Blech 1 gedrückt. Die Drehzahl des Fließbohrers 3 kann je nach Dicke des Bleches 1 etwa zwischen 1.000 und 5.500 U/min liegen. Die Vorschubgeschwindigkeit kann beispielsweise höher als 100 mm/min sein, z.B. etwa 150 mm/min betragen. Der Axialvorschub des Fließbohrers 3 kann manuell erfolgen. Vorteilhaft jedoch erfolgt ein automatischer Vorschub, der konstant, variabel oder auch gestuft sein kann. Der Fließbohrer 3 kann beispielsweise in einer Ständerbohrmaschine, in einer NC- oder einer CNC-Maschine oder in einer dafür konzipierten Anlage eingesetzt werden. Die Drehzahl des Fließbohrers 3 hängt vom Durchmesser des zu erzeugenden Loches im Blech 1 ab. Je kleiner dieser Lochdurchmesser ist, desto höher ist die Drehzahl.

Das Blech 1 kann eine Dicke haben, die bevorzugt etwa 0,5 mm bis etwa 5 mm beträgt. Besonders vorteilhaft ist eine Blechdicke zwischen etwa 0,75 mm und etwa 1,5 mm.

Der drehende Fließbohrer 3 wird unter entsprechendem Druck auf das Blech 1 aufgesetzt. Durch Reibungshitze wird das Blechmaterial weich bzw. verformbar. Wie aus Fig. 1b hervorgeht, wird das verformte Material 5 des Bleches 1 in Vorschubrichtung und teilweise auch entgegen Vorschubrichtung des Fließbohrers 3 verdrängt. Er hat einen konischen Arbeitsteil 6, der sich in Vorschubrichtung verjüngt und beim Vorschub des Fließbohrers 3 das verformte Material 5 nach außen verdrängt. Der konische Arbeitsteil 6 geht in einen zylindrischen Arbeitsteil 7 über, mit dem das in Vorschubrichtung nach vorn verdrängte verformte Material 5 am Ende des Fließbohrvorganges (Fig. 1d) radial nach außen so verdrängt wird, dass es sich mit der Hülse 2 in noch zu beschreibender Weise verbindet.

Der zylindrische Arbeitsteil 7 schließt an einen zylindrischen Stempelteil 8 an, der größeren Durchmesser als der Arbeitsteil 7 hat. Mit ihm wird das entgegen Vorschubrichtung des Fließbohrers 3 verdrängte Material am Ende des Fließbohrvorganges in Vorschubrichtung nach vorn in die Hülse 2 verdrängt. Der Fließbohrer 3 wird so weit in Vorschubrichtung bewegt, bis der Stempelteil 8 mit seiner ebenen Ringfläche 9 am Blech 1 anliegt. Der Stempelteil 8 sorgt dafür, dass über die von der Hülse 2 abgewandte Rückseite des Bleches 1 kein Material vorsteht. Der Stempelteil 8 zusammen mit dem zylindrischen Arbeitsteil 7 sorgt dafür, dass das verformte Blechmaterial in die Hülse 2 vollständig verdrängt wird.

Der Stempelteil 8 kann auch mit wenigstens einer Schneide versehen sein, mit der der über die Rückseite des Bleches 1 vorstehende Materialteil spanend abgetragen wird.

Das durch den Fließbohrer 3 verdrängte Blechmaterial 5 verbindet sich stoffschlüssig mit der Hülse 2, so dass diese über ihre axiale Länge einen konstanten Innendurchmesser aufweist (Fig. 1d). Der Durchmesser des zylindrischen Arbeitsteiles 7 ist auf den Innendurchmesser der Hülse 2 so abgestimmt, dass der Außendurchmesser des Arbeitsteiles 7 dem Innendurchmesser der Hülse 2 entspricht.

Aufgrund der beim Fließbohren entstehenden hohen Reibungshitze verbinden sich das Blech 1 sowie dessen verdrängtes Material 5 stoffschlüssig mit dem Material der Hülse 2, so dass eine einwandfreie unlösbare Verbindung zwischen dem Blech 1 und der Hülse 2 hergestellt wird. Nach Beendigung des Fließbohrens wird der Fließbohrer 3 aus der nunmehr am Blech 1 befestigten Hülse 2 zurückgezogen.

Erst nach Herstellung der Verbindung zwischen der Hülse 2 und dem Blech 1 wird in die Innenwand der Hülse 2 ein Gewinde eingebracht. Es kann durch einen Gewindeschneidvorgang, vorteilhaft aber durch einen Gewindeformvorgang in der Innenwand 10 der Hülse 2 eingebracht werden. Der Gewindeformvorgang hat den Vorteil, dass eine Materialverfestigung im Bereich des Gewindes erreicht wird und die Tragfähigkeit des Gewindes erhöht ist. Beim Gewindeformen wird kein Material abgetragen, was zu einer Schwächung der Verbindung führen würde.

Im Ausführungsbeispiel wird der konische Arbeitsteil 6 des Fließbohrers 3 gegen das geschlossene Blech 1 bewegt, wobei in der beschriebenen Weise durch Reibungshitze das Blechmaterial im Bereich des Arbeitsteiles 6 weich wird und beim weiteren Vorschub des Fließbohrers 3 verdrängt wird. Grundsätzlich ist es auch möglich, im Blech 1 Vorlöcher herzustellen, in die dann die Fließbohrungen eingebracht werden. Das Anbringen der Vorlöcher hat den Vorteil, dass der Fließbohrer 3 mit einer geringeren Axialkraft gegen das Blech 1 bewegt werden kann.

Mit dem Fließbohrer 3 können Werkstücke aus Stahl, Aluminium, Messing, Kupfer und dergleichen bearbeitet werden. Da beim Fließbohren lediglich das Material des Bleches 1 verdrängt wird, entsteht kein Abfall beim Fließbohrvorgang, der umständlich entsorgt werden müsste. Die beschriebene Verbindung zwischen dem Blech 1 und der Hülse 2 kann innerhalb kürzester Zeit durch den Fließbohrvorgang hergestellt werden. Für die Herstellung sind beispielsweise nur 2 bis 10 Sekunden erforderlich.

Bei der erwähnten Alternative, das vorstehende Material spanend abzutragen, entstehen Späne, die aber nur in solchen geringen Mengen anfallen, dass sie beim Fertigungsprozess nicht stören. Sie lassen sich zudem einfach entfernen.

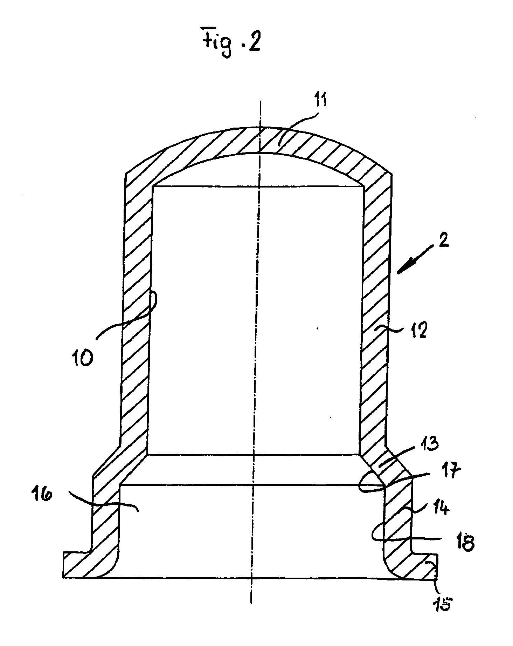

Die Hülse 2, in deren Innenwand 10 das Gewinde erzeugt werden soll, ist hutförmig ausgebildet (Fig. 2) und hat einen nach außen gewölbten Boden 11. Er ist an einem Ende eines zylindrischen Mantels 12 der Hülse 2 vorgesehen. Der Mantel 12 geht über einen kegelförmigen Zwischenabschnitt 13 in einen zylindrischen Endabschnitt 14 über, der am freien Ende mit einem nach außen ragenden Radialflansch 15 versehen ist. Der Endabschnitt 14 hat einen größeren Innen- und Außendurchmesser als der Mantel 12. Mit dem Radialflansch 15 liegt die Hülse 2 beim Fließbohrvorgang flächig am Blech 1 an (Fig. 1a bis 1c).

Aufgrund des kegelförmigen Zwisichenabschnittes 13 ist die Hülse 2 an ihrem vom Boden 11 abgewandten Ende mit einem Aufnahmeraum 16 versehen, der durch die Innenwand 17 des kegelförmigen Zwischenabschnittes 13 und die Innenwand 18 des Endabschnittes 14 begrenzt ist. Die Innenwand 17 schließt stumpfwinklig an die Innenwand 10 des Mantels 12 an.

Der ringförmige Aufnahmeraum 16 hat eine solche Größe, dass er das beim Fließbohrvorgang anfallende verformte Material 5 aufnehmen kann, das durch die beiden Arbeitsteile 6, 7 des Fließbohrers 3 in den Aufnahmeraum 16 so verdrängt wird, dass das Blechmaterial 5 den Aufnahmeraum 16 vollständig ausfüllt (Fig. 1d). Die Materialien des Bleches 1 und der Hülse 2 sind so aufeinander abgestimmt, dass die beschriebene stoffschlüssige Verbindung zwischen dem Blech 1 und der Hülse 2 gewährleistet ist. Aufgrund der beim Fließbohren entstehenden hohen Reibungshitze verbindet sich auch das Material des Radialflansches 15 der Hülse 2 stoffschlüssig mit dem Blech 1 (Fig. 1d).

Nach dem Fließbohrvorgang weist die Hülse 2 über ihre Länge konstanten Innendurchmesser auf, so dass das Gewinde problemlos in die Innenwand der Hülse 2 eingebracht werden kann. Aufgrund der stoffschlüssigen Verbindung der Hülse 2 mit dem Blech 1 ergibt sich eine einwandfreie feste Verbindung zwischen den beiden Bauteilen. Da der Aufnahmeraum 16 der Hülse 2 durch das verdrängte Blechmaterial 5 ausgefüllt ist, ist der Anschlussbereich der Hülse 2 an das Blech 1 verstärkt ausgebildet, was zu hoher Verwindungsfestigkeit beiträgt.

Bei der Gewindeerzeugung wird das Gewinde in das im Aufnahmeraum 16 der Hülse 2 befindliche verdrängte Material 5 des Bleches 1 und in die Innenwand 10 des Mantels 12 eingebracht. Dadurch erstreckt sich das Gewinde von der von der Hülse 2 abgewandten Außenseite des Bleches 1 in die Hülse 2, so dass eine große Gewindelänge erreicht wird.

Um die Hülse 2 mit dem Blech 1 zu verbinden, ist es auch möglich, mit dem Fließbohrer 3 zunächst nur das Blech 1 in der beschriebenen Weise zu bearbeiten. Am Ende des Fließvorganges wird durch das verdrängte Blechmaterial 5 eine über das Blech 1 vorstehende Buchse gebildet, deren Innendurchmesser durch den Außendurchmesser des zylindrischen Arbeitsteiles 7 des Fließbohrers 3 bestimmt wird. Anschließend wird auf die so geformte Buchse des Bleches 1 die Hülse 2 aufgesetzt und mit ihr durch einen Schweißvorgang, beispielsweise durch Widerstandsschweißen, verbunden. Anschließend wird dann das Gewinde erzeugt.

Mit beiden Verfahren ist es möglich, die Schraubverbindung gasdicht auszubilden, so dass die Muttern in Form der Hülsen 2 problemlos dort eingesetzt werden können, wo gasdichte Schraubverbindungen gefordert werden. Solche Schraubverbindungen werden beispielsweise in der Automobilindustrie verwendet.

Das beschriebene Verfahren kann beispielsweise auch bei Bauteilen eingesetzt werden, die aus Thermoplasten bestehen. Auch hier kann durch den Fließbohrvorgang das Material infolge der Reibungshitze erweicht und dann durch den Fließbohrer verformt bzw. verdrängt werden, wie anhand von Fig. 1 beschrieben worden ist.

Das beschriebene Verfahren ist nicht auf die Verbindung eines Bleches mit einer Hülse beschränkt. In gleicher Weise lassen sich beispielsweise auch zwei Bleche miteinander verbinden. Sie werden aufeinander gelegt und mit einer geeigneten Spannvorrichtung fest gegeneinander gedrückt. Mit dem Fließbohrer 3 wird anschließend ein Fließlochbohrvorgang durchgeführt, wie er zuvor beschrieben worden ist. Der Fließlochbohrer 3 wird an den erforderlichen Stellen durch die beiden zusammen gespannten Bleche gedrückt. Das Blechmaterial wird so stark erhitzt, dass es zu einer festen, unlösbaren Verbindung zwischen den aufeinander liegenden Blechen kommt.

## Patentansprüche

1. Verfahren zur Herstellung einer unlösbaren Verbindung zwischen mindestens zwei Werkstücken,
**dadurch gekennzeichnet, dass** das eine Werkstück (1) durch Rotation eines Werkzeuges (3) örtlich so erhitzt wird, dass der erhitzte Werkstückbereich (5) zu einer Buchse geformt werden kann, die über das Werkstück (1) vorsteht, und dass die Reibungshitze so hoch ist, dass sich das verdrängte Material in Form der Buchse (5) mit dem Material des anderen Werkstückes (2) stoffschlüssig verbindet.

2. Verfahren nach Anspruch 1,
**dadurch gekennzeichnet, dass** das eine Werkstück (1) blechförmig und das andere Werkstück (2) hülsenförmig ausgebildet ist.

3. Verfahren nach Anspruch 2,
**dadurch gekennzeichnet, dass** das hülsenförmige Werkstück (2) auf die geformte Buchse (5) aufgesetzt und fest mit ihr verbunden wird.

4. Verfahren nach Anspruch 2 oder 3,
**dadurch gekennzeichnet, dass** in die Innenwand der geformten Buchse und in die Innenwand (10) des hülsenförmigen Werkstückes (2) ein Innengewinde eingebracht wird.

5. Verfahren nach Anspruch 2 oder 4,
**dadurch gekennzeichnet, dass** das hülsenförmige Werkstück (2) an das eine Werkstück (1) angesetzt und anschließend das Werkstück im Bereich des hülsenförmigen Werkstückes (2) erhitzt wird, und dass der erhitzte Werkstückbereich (5) in das hülsenförmige Werkstück (2) so verdrängt wird, dass sich der erhitzte Werkstückbereich (5) stoffschlüssig mit dem hülsenförmigen Werkstück (2) verbindet.

6. Verfahren nach einem der Ansprüche 1 bis 5,
**dadurch gekennzeichnet, dass** das eine Werkstück (1) durch Reibungshitze mittels eines Fließbohrers (3) erhitzt wird.

7. Verfahren nach einem der Ansprüche 2 bis 6,
**dadurch gekennzeichnet, dass** der erhitzte Werkstückbereich (5) in einen Aufnahmeraum (16) des hülsenförmigen Werkstückes (2) verdrängt wird.

8. Verfahren nach Anspruch 7,
**dadurch gekennzeichnet, dass** der erhitzte Werkstückbereich (5) den Aufnahmeraum (16) des hülsenförmigen Werkstückes (2) zumindest weitgehend vollständig ausfüllt.

9. Verfahren nach einem der Ansprüche 2 bis 8,
**dadurch gekennzeichnet, dass** das hülsenförmige Werkstück (2) derart mit dem einen Werkstück (1) verbunden wird, dass ein Stoffschluss zwischen beiden Teilen entsteht.

10. Nach dem Verfahren gemäß einem der Ansprüche 1 bis 9 hergestellte Verbindung,
**dadurch gekennzeichnet, dass** das eine Werkstück (1) eine herausgeformte Buchse (5) aufweist, die derart stoffschlüssig mit dem anderen Werkstück (2) verbunden ist, dass die Verbindung nahtfrei ist.

11. Verbindung nach Anspruch 10,
**dadurch gekennzeichnet, dass** das hülsenförmige Werkstück (2) an seinem dem einen Werkstück (1) zugewandten Ende einen Aufnahmeraum (16) aufweist, der das aus dem Werkstück (1) verdrängte Material (5) aufnimmt.

12. Verbindung nach Anspruch 11,
**dadurch gekennzeichnet, dass** das hülsenförmige Werkstück (2) über seine Länge konstanten Innendurchmesser aufweist.

13. Verbindung nach Anspruch 11 oder 12,
**dadurch gekennzeichnet, dass** das hülsenförmige Werkstück (2) mit einem Radialflansch (15) versehen ist, mit dem es am einen Werkstück (1) anliegt.

14. Verbindung nach Anspruch 13,
**dadurch gekennzeichnet, dass** der Radialflansch (15) stoffschlüssig mit dem einen Werkstück (1) ausgebildet ist.
